# EUROPEAN PATENT SPECIFICATION

(11) **EP 1 728 416 B1**
(45) Date of publication and mention of the grant of the patent: **18.11.2009**
(21) Application number: 06252666.0
(22) Date of filing: 22.05.2006
(51) Int. Cl.: A01G 1/12, A47L 5/14

(54) **Garden tool**
Gartengerät
Outil de jardinage

(30) Priority: 30.05.2005 CN 200520071979; 25.04.2006 CN 200610077909
(43) Date of publication of application: 06.12.2006
(73) Proprietor: Suzhou Cleva Electric Appliance Co. Ltd., Suzhou Industrial Park Suzhou Jiangsu 215122 (CN)
(72) Inventor: Kong, Zhao c/o Suzhou Cleva Electric Appl. Co.Ltd., 215011 Suzhou (CN)
(74) Representative: Stuttard, Garry Philip

(56) References cited:
- EP-A- 0 723 759
- US-A- 4 694 528
- US-A- 5 560 078
- US-A- 5 722 110
- US-A1- 2002 108 211

## Description

The present invention relates to a garden tool.

A blower-vacuum device is a garden tool used for collecting leaves and other garden waste. The blower-vacuum generally comprises a housing, a drive motor disposed in the housing, a fan and a single connecting tube attached directly to the housing and forms a vacuum passageway and a blower passageway for the leaves and other garden waste. A safety switch is arranged in the housing and the connecting tube forms a trigger mechanism for triggering the safety switch. The two ends of the connecting tube are open and one open end is adjacent to the high speed rotary fan. The connecting tube therefore must be long enough to meet safety standards for preventing a user's arm from accidentally contacting the fan during use. Accordingly the length of the single connecting tube for the blower-vacuum brings makes it inconvenient to package and transport.

In other blower-vacuum devices, two or more connecting tubes each having a relative short length are arranged side-by-side during packing and are connected in series during use. Thus the length of the connecting tubes satisfies safety standard and the connecting tubes are convenient to pack and transport. However the connecting tube which is directly adjacent to the fan in the housing may trigger the safety switch when the other connecting tube is unconnected. This causes misoperation and has safety implications for users.

US2002/0108211 discloses a blower with an impeller having non-uniform spacing between vanes. US-A-5722110 discloses an industrial vacuum cleaner system having a plurality of large vanes and a plurality of small vanes on forward and reverse sides of an impeller.

The present invention seeks to improve garden tools by including a trigger mechanism for safely triggering a safety switch which relies on indirectly connecting a terminal connecting tube to the housing.

Thus viewed from a first aspect the present invention provides a garden tool comprising:
a housing;
a switch arranged inside the housing;
a terminal connecting tube detachably connected indirectly to the housing;
a trigger mechanism engageable with the switch to urge the switch into a first operating state when the terminal connecting tube is selectively connected to the housing and disengageable from the switch to urge the switch to a second operating state when the terminal connecting tube is selectively disconnected from the housing;
an intermediate connecting tube connected at a distal end to the housing and at a proximal end detachably to the terminal connecting tube, wherein the trigger mechanism comprises:
   an elongate trigger rod slidably mounted in a receiving slot adjacent and substantially parallel to an interior wall of the intermediate connecting tube and
   a trigger pin extending axially from and beyond the proximal end of the terminal connecting tube such that when the terminal connecting tube is connected to the intermediate connecting tube, the trigger pin advances the elongate trigger rod to urge the switch into the first operating state.

In accordance with the present invention, it is only when the terminal connecting tube is connected indirectly to the housing that the trigger mechanism can trigger the safety switch. This advantageously avoids misoperation and heightens operator safety. The trigger mechanism is structurally simple and reliable.

Preferably the first operating state is open so that the garden tool is operational and the second operating state is closed so that the garden tool is non-operational.

Preferably the switch is a microswitch.

Preferably the switch is a safety switch.

Preferably when the terminal connecting tube is disconnected from the intermediate connecting tube, the elongate trigger rod is retracted to urge the switch into the second operating state.

Preferably the trigger mechanism further includes: a restoring member for retracting the elongate trigger rod, wherein the restoring member includes a spring slidably mounted on the elongate trigger rod between a stopper formed on an inner wall of the intermediate connecting tube and an enlarged portion on the elongate trigger rod.

Preferably the trigger pin is a push rod which when the terminal connecting tube is connected to the intermediate connecting tube advances the elongate trigger rod into sliding engagement with the switch.

Preferably a first end of the elongate trigger rod adjacent to the switch terminates in a substantially C-shaped linear cam engageable with the switch. Particularly preferably the switch comprises: a button, wherein when the terminal connecting tube is connected to the intermediate connecting tube, the substantially C-shaped linear cam elevates the button to urge the switch into the first operating state.

Preferably the garden tool is a blower-vacuum device.

The present invention will now be described in a non-limitative sense with reference to the accompanying Figures in which:
Figure 1 is an exploded view of a garden tool according to a first embodiment of the present invention;
Figure 2 is an enlarged view of circular portion d in Figure 1;
Figure 3 is an assembled view of the embodiment of Figure 1; and
Figure 4 is an enlarged view of circular portion e in Figure 3
Figure 5 is a planar exploded view of a garden tool according to a second embodiment of the present invention.
Figure 6 is an enlarged view of circular portion f in Figure 5;
Figure 7 is an enlarged view of circular portion g in Figure 5;
Figure 8 is an assembled view of the embodiment of Figure 5;
Figure 9 is an enlarged view of circular portion h in Figure 8;
Figure 10 is an enlarged view of circular portion i in Figure 8;
Figure 11 is a planar exploded view of a garden tool according to a third embodiment of the present invention;
Figure 12 is an enlarged view of circular portion j in Figure 11;
Figure 13 is an assembled view of the embodiment of Figure 11;
Figure 14 is an enlarged view of circular portion k in Figure 13;
Figure 15 is a planar exploded view of a garden tool according to a fourth embodiment of the present invention;
Figure 16 is an enlarged view of circular portion 1 in Figure 15;
Figure 17 is an assembled view of the embodiment of Figure 15;
Figure 18 is an enlarged view of circular portion m in Figure 17;
Figure 19 is a planar exploded view of a garden tool according to a fifth embodiment of the present invention;
Figure 20 is an enlarged view of circular portion n in Figure 19;
Figure 21 is an assembled view of the embodiment of Figure 19;
Figure 22 is an enlarged view of circular portion o in Figure 21;
Figure 23 is a planar exploded view of a garden tool according to a sixth embodiment of the present invention;
Figure 24 is an enlarged view of circular portion p in Figure 23;
Figure 25 is an assembled view of the embodiment of Figure 23; and
Figure 26 is an enlarged view of circular portion q in Figure 25.

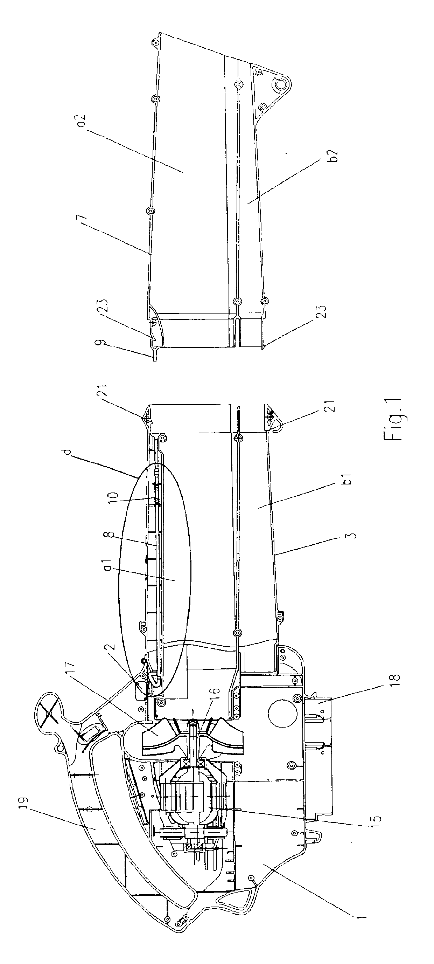

Referring to Figure 1, a garden tool according to a preferred embodiment of the present invention is a blower-vacuum device including a rear housing 1, a drive motor 15 mounted in the housing 1 and a fan 17 mounted axially on an output shaft 16 of the drive motor 15. An upper portion of the housing 1 forms an operator handle 19 and a lower portion of the housing 1 forms an exhaust tube 18 for connection to a debris bag (not shown).

A safety switch 2 is arranged inside the housing 1 adjacent to the fan 17. The safety switch 2 has a button 27 for preventing misuse of the blower-vacuum device. In a first operating state, the safety switch 2 is open whilst in a second operating state, the safety switch 2 is closed.

The blower-vacuum device includes an intermediate connecting tube 3 connected at a distal end to the housing 1 and connected detachably at a proximal end to a terminal connecting tube 7. A collar 21 on the proximal end of the intermediate connecting tube 3 engages a neck portion 23 on the terminal connecting tube 7 to detachably connect the intermediate connecting tube 3 to the terminal connecting tube 7.

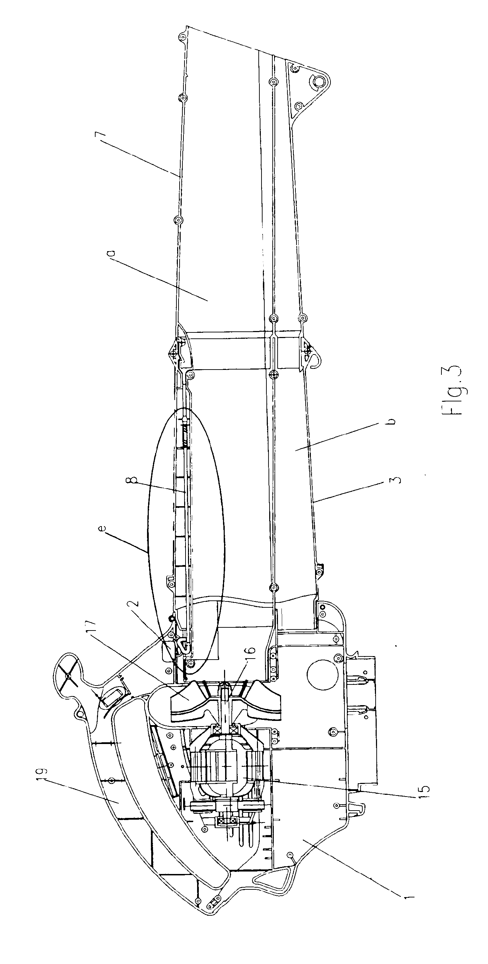

Each of the intermediate and terminal connecting tubes 3, 7 is hollow and defines a vacuum passage a1/a2 and a separate blower passage b1/b2. When the intermediate and terminal connecting tubes 3, 7 are connected, the vacuum passages a1 and a2 are aligned to form a unitary vacuum passage a and the blower passages b1 and b2 are aligned to form a unitary blower passage b (as shown in Figure 3).

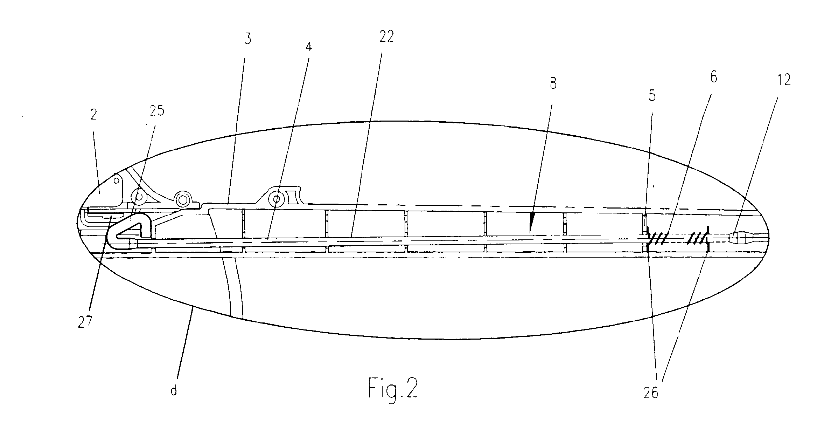

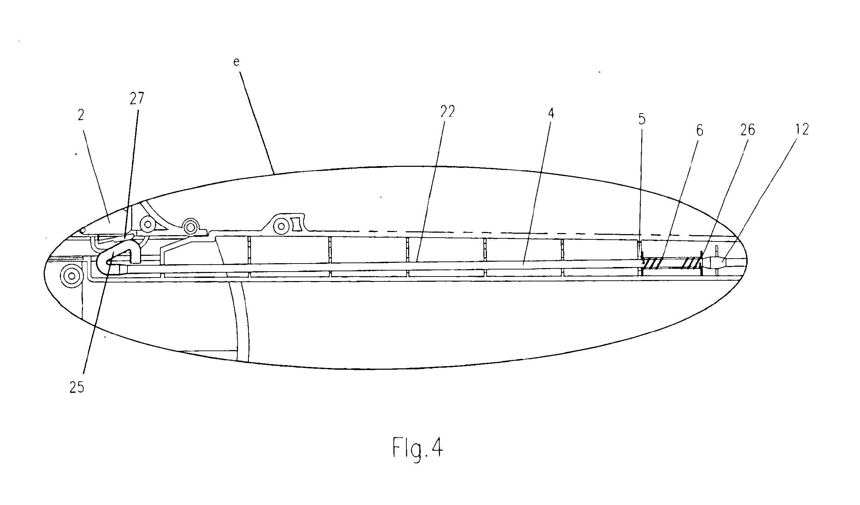

With particular reference to Figures 2 and 4, the blower-vacuum device further includes a trigger mechanism 8 for triggering the safety switch 2. When the terminal connecting tube 7 is connected to the intermediate connecting tube 3, the trigger mechanism 8 is engaged with and opens the safety switch 2 (Figure 4). When the terminal connecting tube 7 is disconnected from the intermediate connecting tube 3, the trigger mechanism 8 is disengaged from and closes the safety switch (Figure 2).

The trigger mechanism 8 includes an elongate trigger rod 4 slidably mounted in a receiving slot 22 adjacent and substantially parallel to the interior wall of the intermediate connecting tube 3. In the first embodiment, a first end of the elongate trigger rod 4 adjacent to the safety switch 2 terminates in a substantially C-shaped linear cam 25. The linear cam 25 is engageable with the button 27 of the safety switch 2.

The trigger mechanism 8 further includes a push rod 9 which extends axially from and beyond the proximal end of the terminal connecting tube 7. As the terminal connecting tube 7 connects to the intermediate connecting tube 3, the push rod 9 inserts into the receiving slot 22 and advances the elongate trigger rod 4 slidably along the receiving slot 22 towards the safety switch 2 from an initial position shown in Figure 2 to a terminal position shown in Figure 4. This causes the linear cam 25 to elevate the button 27 and open the safety switch 7.

The trigger mechanism 8 further includes a restoring member 10 which urges the elongate trigger rod 4 to the initial position. The restoring member 10 includes a spring 6 slidably mounted on the trigger pole 4 between a stopper 5 formed on an inner wall of the intermediate connecting tube 3 and an enlarged portion 12 on the elongate trigger rod 4. A first end of the spring 6 abuts the stopper 5 and a second end of the spring 6 abuts the enlarged portion 12. The restoring member 10 further comprises a pair of spacers 26 mounted on the elongate trigger rod 4 adjacent to the respective ends of the spring 6.

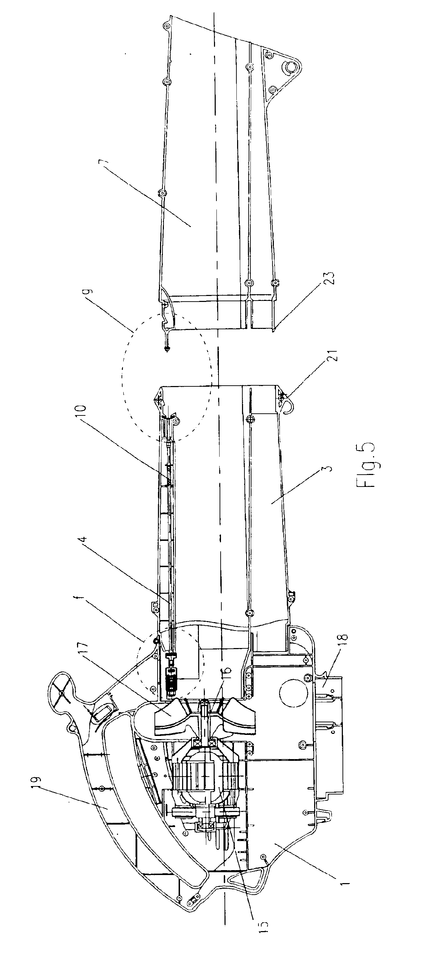

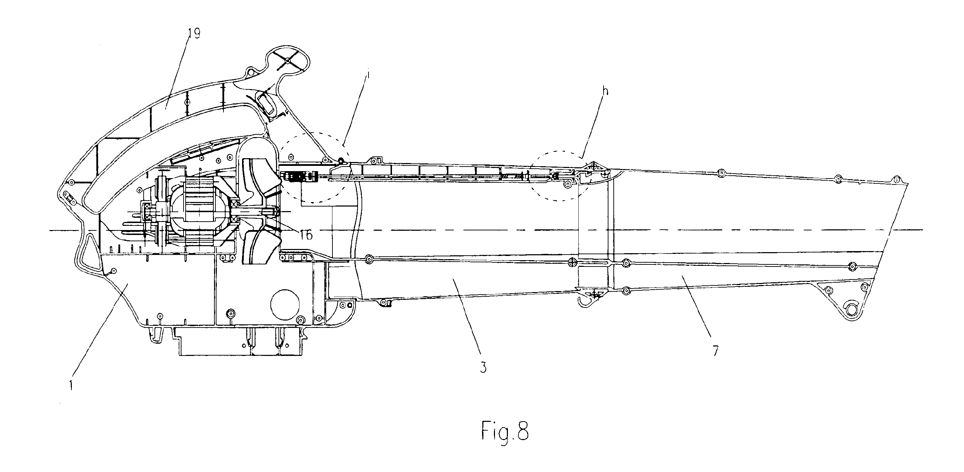

A blower-vacuum device according to a second embodiment of the present invention is shown in Figures 5 to 9. The blower-vacuum device has substantially the same configuration as that of the first embodiment but has a different safety switch and trigger mechanism. The same or similar features as those of the first embodiment will be indicated with the same numerals.

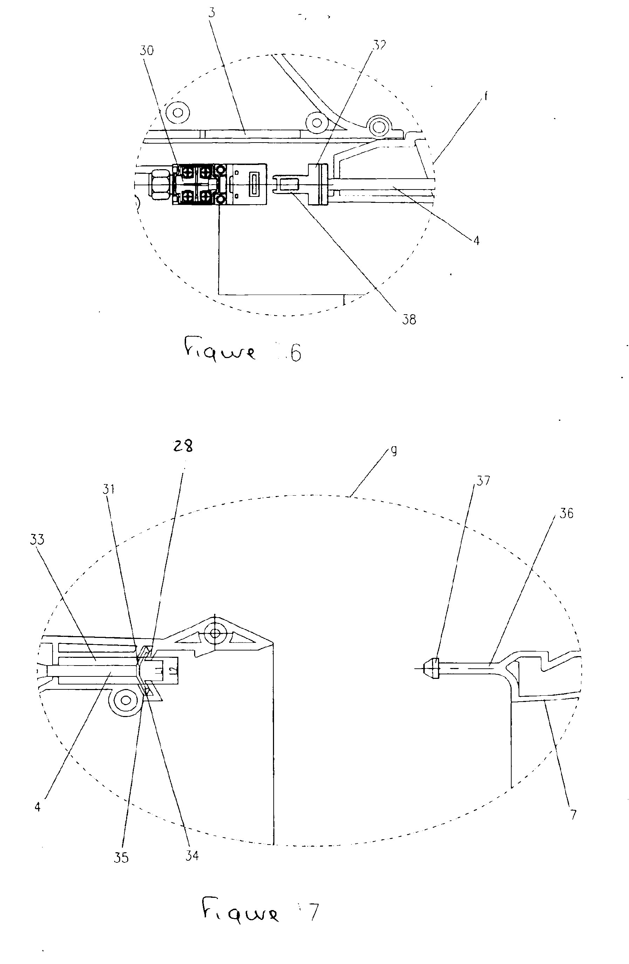

With reference to Figures 5 and 6, a safety switch 30 is arranged inside a housing 1 close to a fan 17. The trigger mechanism is a non-resilient mechanical assembly which can positively disconnect two contacts (not shown) to close the safety switch 30 when the intermediate connecting tube 3 is disconnected from the housing 1. The trigger mechanism is arranged inside the intermediate and terminal connecting tubes 3, 7. When the terminal connecting tube 7 is connected to the intermediate connecting tube 3, the trigger mechanism triggers the safety switch 30 by connecting the two contacts of the safety switch 30 to open the safety switch 30 and make the blower-vacuum device operational. When the terminal connecting tube 7 is disconnected from the intermediate connecting tube 3, the trigger mechanism disconnects the two contacts so that the safety switch 30 is closed and the blower-vacuum is non-operational. Accordingly the trigger mechanism is a positive reset device which can positively reset the two contacts of the safety switch to a disconnection state when the intermediate connecting tube is disassembled from the housing 1.

The trigger mechanism in the second embodiment includes an elongate trigger rod 4 slidably disposed in the intermediate connecting tube 3, an actuator 32 attached to a first end of the elongate trigger rod 4, a mating piece 31 arranged on a second end of the elongate trigger rod 4 (opposite to the first end) and a trigger pin 36 extending axially from and beyond the end of the terminal connecting tube 7. The actuator 32 has an insert 38 insertable into the safety switch 30 to actuate the two contacts so that the safety switch 30 is open. The mating piece 28 is a resilient latch made of plastic or the like and forms a pair of latch claws 34 extending outwardly. The intermediate connecting tube 3 defines a sliding slot 33 and a pair of receiving slots 35 communicating with the sliding slot 33. The receiving slots 35 diverge from an end of the sliding slot 33 and the latch claws 34 are received in the receiving slots 35 when the terminal connecting tube 7 is disconnected from the intermediate connecting tube 3. A pair of guide pieces 31 are formed outside the receiving slots 35 and extend towards the inner of the sliding slot 33. A distance L1 between the pair of guide pieces 31 is smaller than a width L2 of the sliding slot 33.

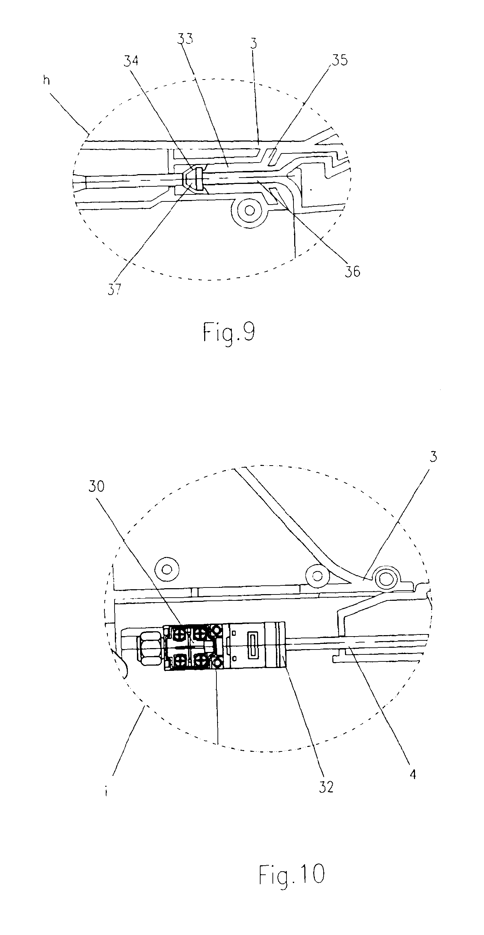

The trigger pin 36 is a substantially cylindrical body terminating in a latch block 37. When the terminal connecting tube 7 is connected to the intermediate connecting tube 3, the latch block 37 pushes the mating piece 28 forward so that the latch claws 34 are disengaged from the respective receiving slots 35 and compressed into the sliding slot 33 thereby clasping and moving forward with the latch block 37. The actuator 32 is pushed forward until the insert 38 is inserted into the safety switch 30 (Figure 10). The safety switch 30 is open and the blower-vacuum device is operational. Meanwhile a restoring member 10 is in a compressed condition (as illustrated for the first embodiment of the present invention). When the terminal connecting tube 7 is disconnected from the intermediate connecting tube 3, the latch block 37 together with the mating piece 28 and the elongate trigger rod 4 is retracted along the sliding slot 33 via rearward movement of the terminal connecting tube 7 and the restoring force of the restoring member 10. The latch claws 34 are guided by the guiding piece 31 into the receiving slots 35 and the latch block 37 is free from the latch claws 34 so that the terminal connecting tube 7 is successfully disconnected from the intermediate connecting tube 3. Meanwhile the actuator 32 is extracted from the safety switch 30 thereby disconnecting the two contacts to close the safety switch 30 and make the blower-vacuum device non-operational.

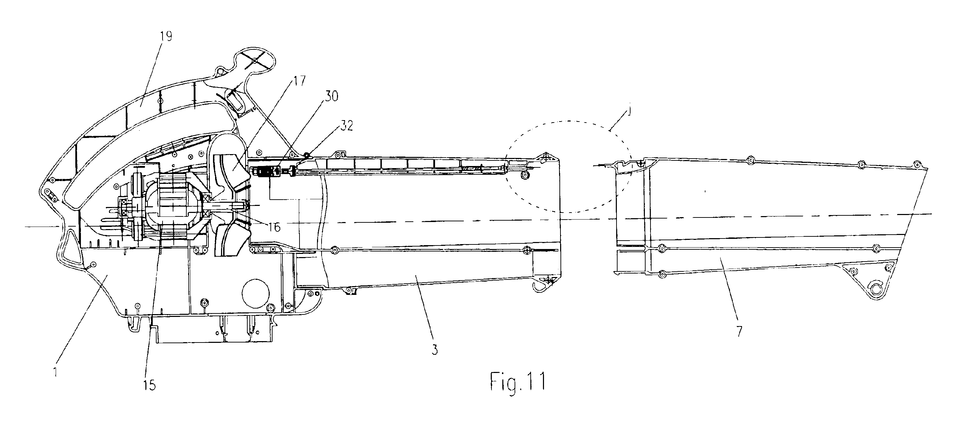

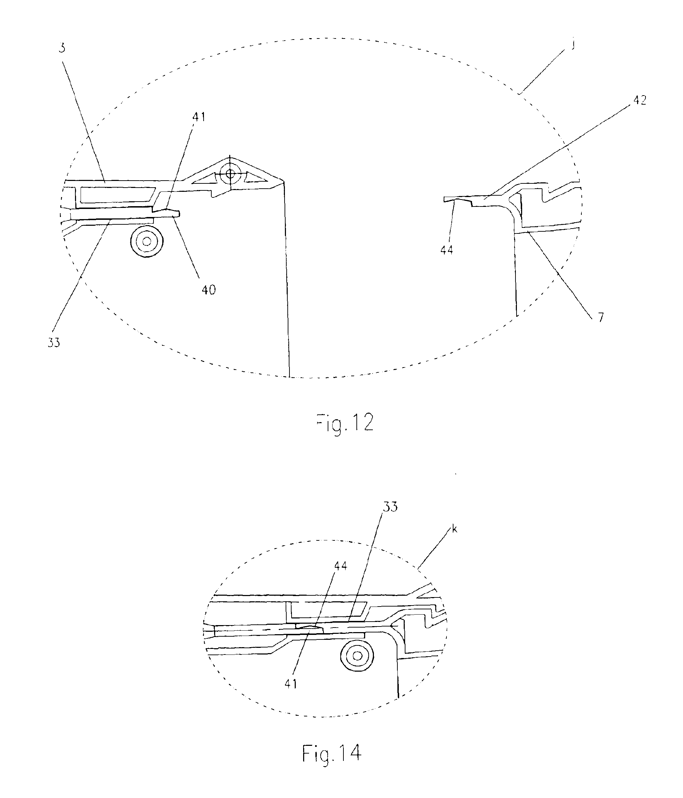

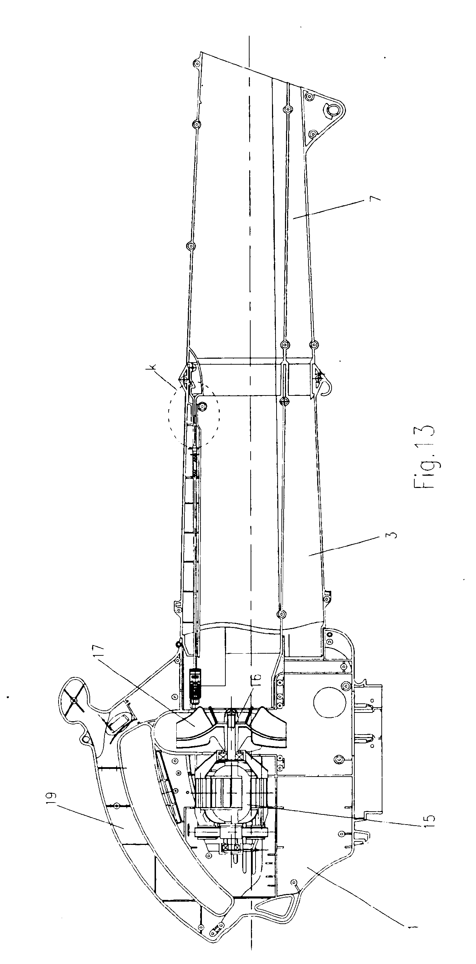

Referring to Figures 11 to 14, a blower-vacuum device according to a third embodiment of the present invention is shown. The blower-vacuum device has substantially the same configuration as that of the second embodiment but has a different trigger mechanism. The same or similar features as those of the first embodiment will be indicated with the same numerals.

According to the third embodiment, a mating piece 40 includes a cylindrical body at a second end of the elongate trigger rod 4 and a projection 41 formed on the cylindrical body. The trigger pin 42 includes a cylindrical extension extending axially from and beyond the proximal end of the terminal connecting tube 7 and a cutaway portion 44 defined in the cylindrical body. The cutaway portion 44 and the projection 41 are matched in shape. When the terminal connecting tube 7 is connected to the intermediate connecting tube 3, the cutaway portion 44 is latched with the projection 41 which advances the elongate trigger rod 4 along the sliding slot 33 until the insert 38 is advanced into the safety switch 30. The safety switch 30 is open and the blower-vacuum device is operational. When the terminal connecting tube 7 is disconnected from the intermediate connecting tube 3, the trigger pin 42 retracts with the mating piece 40 on the elongate trigger rod 4 free from restriction of the sliding slot 33 to disconnect from the mating piece 40 when it moves out of the sliding slot 33. The terminal connecting tube 7 is disconnected from the intermediate connecting tube 3 and at the same time the actuator 32 is withdrawn from and closes the safety switch 30.

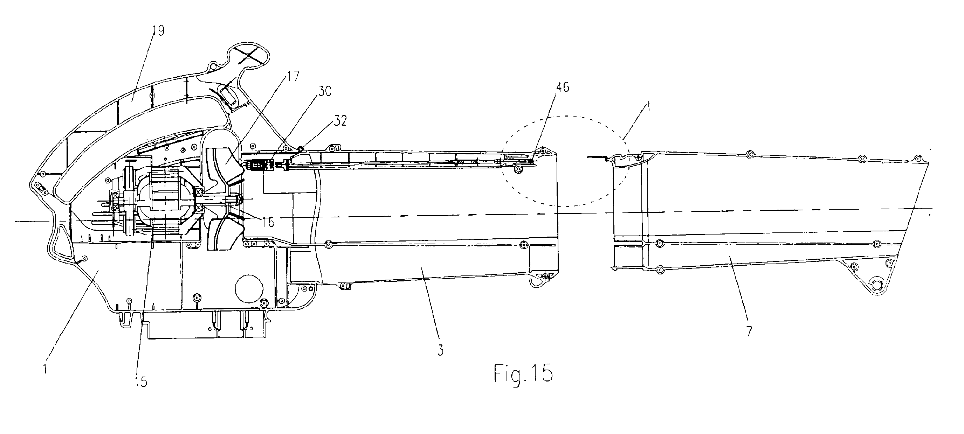

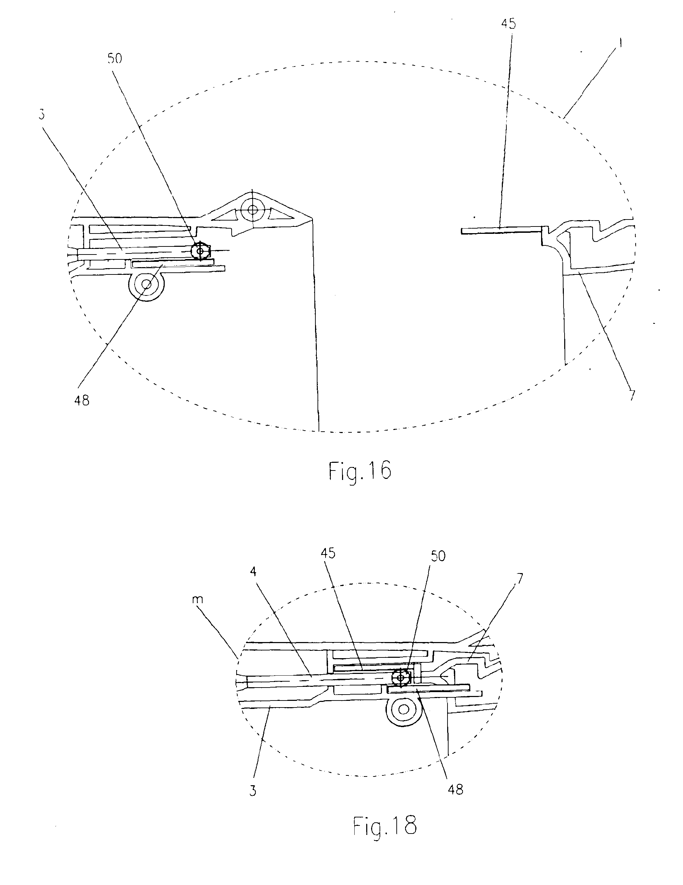

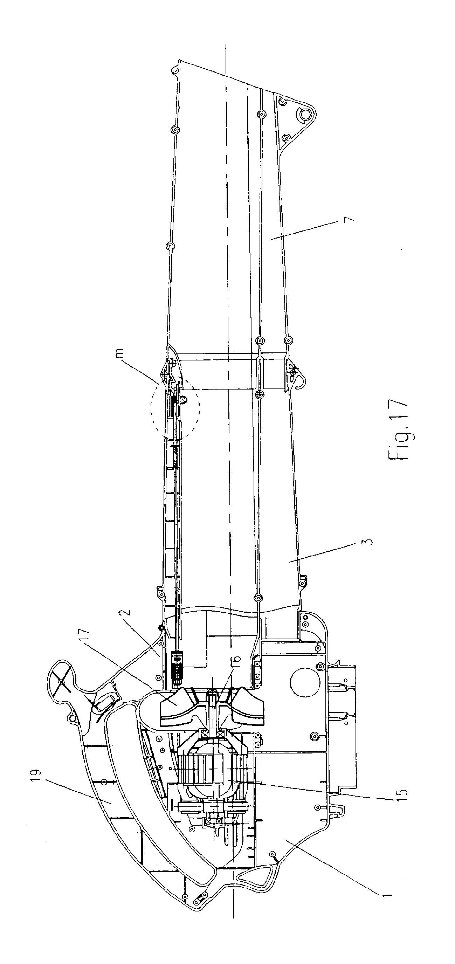

Referring to Figures 15 to 18, a blower-vacuum device according to a fourth embodiment of the present invention is shown. The blower-vacuum device has substantially the same configuration as that of the second embodiment but has a different trigger mechanism. The same or similar features as those of the first embodiment will be indicated with the same numerals.

According to the fourth embodiment, a mating piece 46 of the trigger mechanism includes a first rack 48 fixed in the intermediate connecting tube 3 and a first gear 50 rotatably connected to the end of the elongate trigger rod 4. The first gear 50 is engageable with the first rack 48. The trigger pin of the fourth embodiment is a second rack 45 extending axially from and beyond the proximal end of the terminal connecting tube 7. The second rack 45 is engageable with the first gear 50.

When the terminal connecting tube 7 is connected to the intermediate connecting tube 3, the second rack 45 movably engages the first gear 50 and the first gear 50 is movably engaged with the first rack 48. The elongate trigger rod 4 moves via the transmission force between the first gear 50 and the first rack 48 until the insert 38 advances into and triggers the safety switch 30. The blower-vacuum device is then operational. When the terminal connecting tube 7 is disconnected from the intermediate connecting tube 3, the second rack 45 retracts and engages the first gear 50. The first gear 50 is therefore movably engaged with the first rack 50 so that the elongate trigger rod 4 retracts until the actuator 32 is withdrawn from the safety switch 30 and the terminal connecting tube 7 is simultaneously disconnected from the intermediate connecting tube 3. The safety switch is closed and the blower-vacuum device is non-operational.

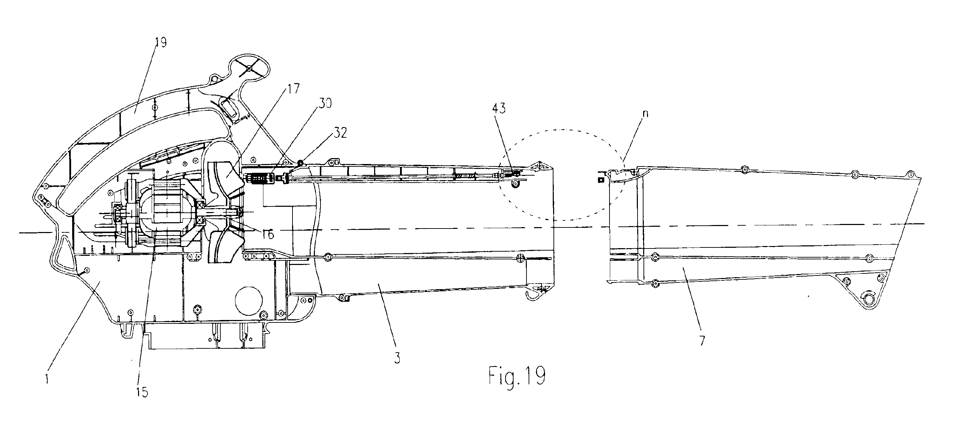

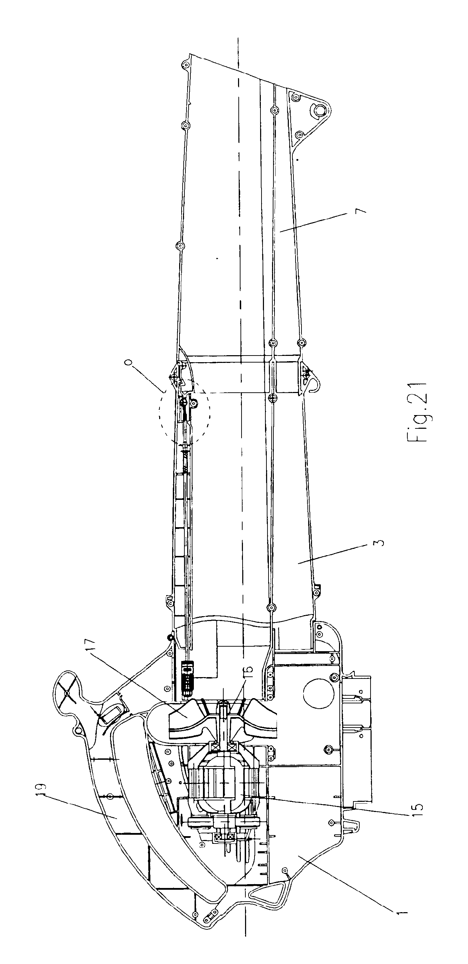

Referring to Figures 19 to 22, a blower-vacuum device according to a fifth embodiment of the present invention is shown. The blower-vacuum device has substantially the same configuration as that of the second embodiment but has a different trigger mechanism. The same or similar features as those of the first embodiment will be indicated with the same numerals.

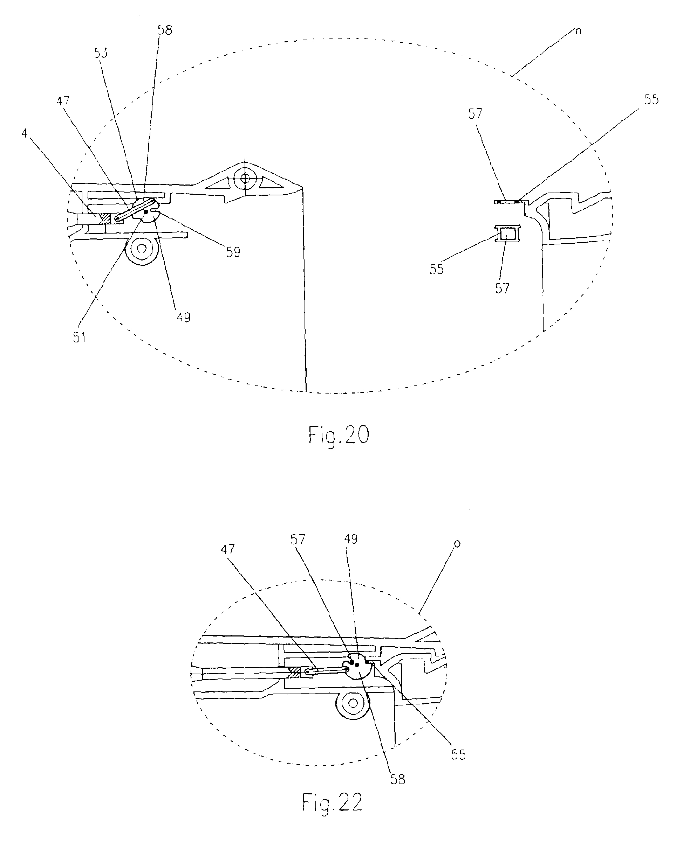

According to the fifth embodiment, a mating piece 43 includes a first rotary cam 58 rotatable about a pivot 51 on the intermediate connecting tube 3. The first rotary cam 58 includes a cam face 53 which forms a circumferential latch block 49 alongside a radial latch slit 59. A first end of a connecting rod 47 is fixed to the first rotary cam 58 and the second (opposite) end of the connecting rod 47 is pivotably connected to the second end of the elongate trigger rod 4. The trigger pin is a first trigger block 55 extending axially from and beyond the proximal end of the terminal connecting tube 7. The first trigger block 55 is flat and defines a latch slot 57. When the terminal connecting tube 7 is connected to the intermediate connecting tube 3, the first trigger block 55 enters the latch slit 59 and rotates the first rotary cam 58 counterclockwise about the pivot 5 so that the first rotary cam 58 pushes the connecting rod 47 until the latch block 49 enters into the latch slot 57. Meanwhile, the insert 38 advances into the safety switch 30 to trigger the safety switch 30 and make the blower-vacuum device operational. When the terminal connecting tube 7 is disconnected from the intermediate connecting tube 3, the first trigger block 55 retracts which rotates the first rotary cam 58 clockwise. The connecting rod 47 upwardly rotates so that the elongate trigger rod 4 retracts until the first rotary cam 58 rotates to the initial position shown in Figure 20. Thus the first trigger block 55 is withdrawn from the latch slot 59 and the terminal connecting tube 7 is disconnected from the intermediate connecting tube 3. At the same time, the actuator 32 is withdrawn from and closes the safety switch 30 to make the blower-vacuum device non-operational.

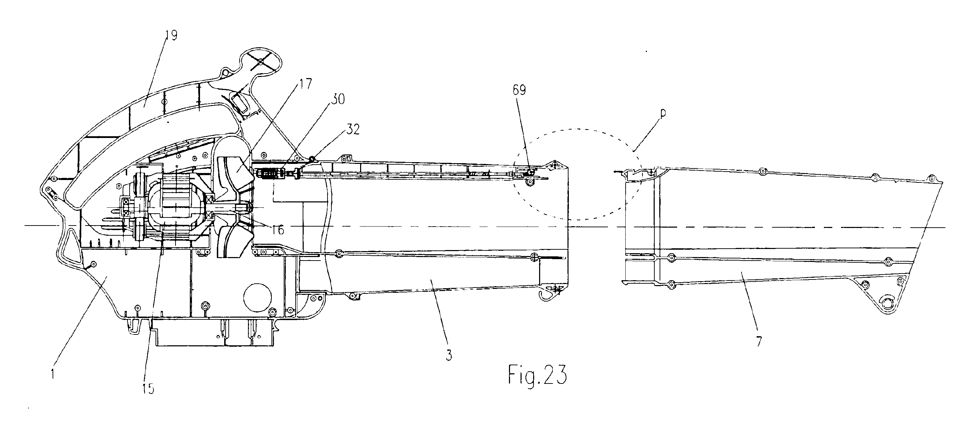

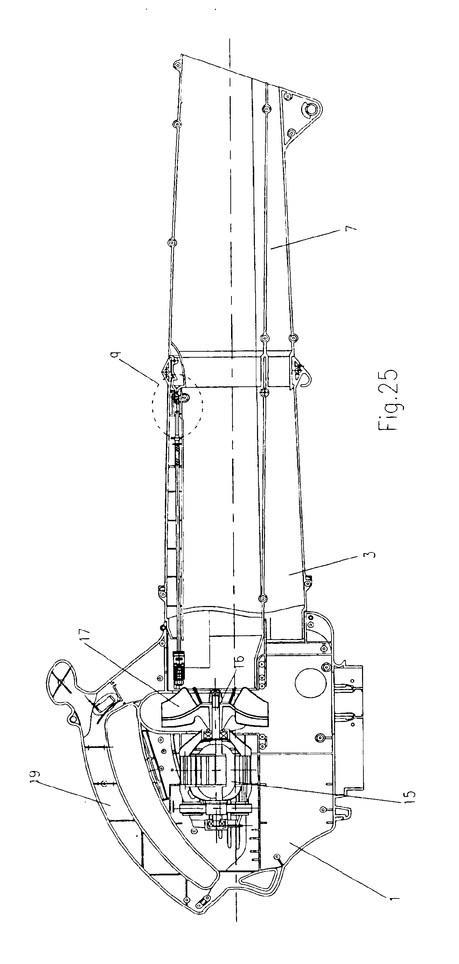

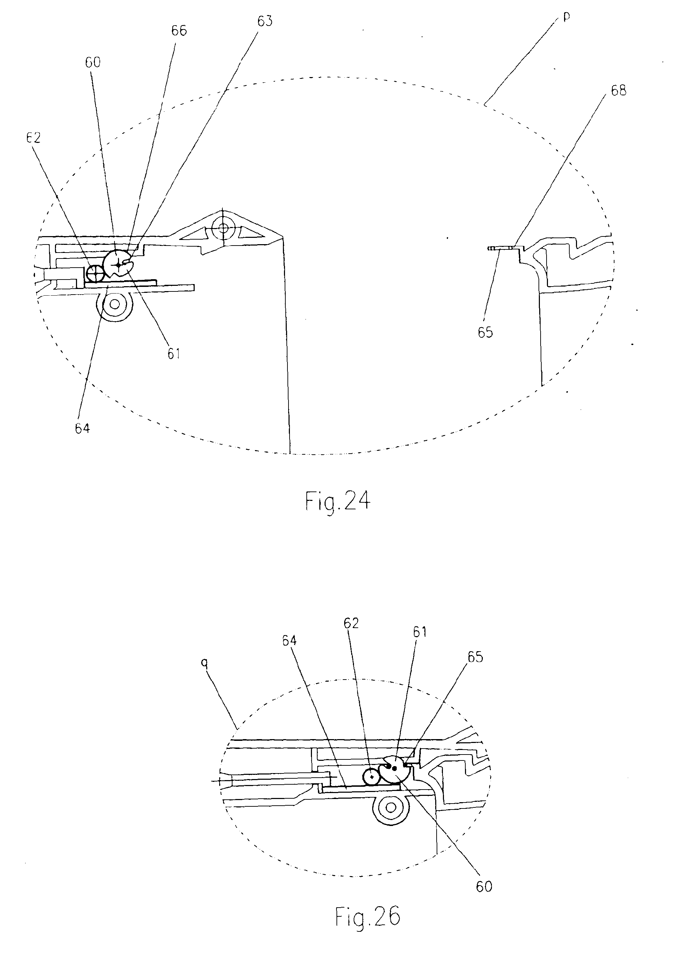

Referring to Figures 23 to 26, a blower-vacuum device according to a sixth embodiment of the present invention is shown. The blower-vacuum device has substantially the same configuration as that of the fifth embodiment but has a different trigger mechanism. The same or similar features as those of the first embodiment will be indicated with the same numerals.

According to the sixth embodiment, a mating piece 69 includes a second rotary cam 60 mounted in the intermediate connecting tube 3, a second rotary gear 62 mounted in the intermediate connecting tube 3 and a third rack 64 fixed to the elongate trigger rod 4. The second rotary cam 60 is structurally substantially the same as the first rotary cam 58 in the fifth embodiment and includes a circumferential latch block 61 and a radial latch slit 63 and forms a toothed portion 66 on a circumference thereof. The toothed portion 66 is engageable with the second gear 62 and the second gear 62 is arranged between and engageable with the second rotary cam 60 and the third rack 64. A trigger pin capable of mating with the mating piece 69 includes a second trigger block 68 which has an identical structure to that of the first trigger block 55 in the fifth embodiment. The second trigger block 68 also defines a latch slit 65 mateable with the second cam 60. When the terminal connecting tube 7 is connected to the intermediate connecting tube 3, the second trigger block 68 enters the latch slit 63 and rotates the second rotary cam 60 counterclockwise so that simultaneously the second gear 62 is rotatably engaged with the second cam 60 and with the third rack 64. The third rack 64 is advanced via a transmission force between the second rotary gear 62 and the third rack 64 until the latch block 61 of the second cam 60 enters into the latch slot 65. Meanwhile the insert 38 is inserted into and opens the safety switch 30 to make the blower-vacuum device operational. When the terminal connecting tube 7 is disconnected from the intermediate connecting tube 3, retraction of the second trigger block 68 rotates the second rotary cam 60 clockwise so that the second gear 62 is simultaneously engaged with the second cam 60 and the third rack 64. The third rack 64 retracts via a transmission force between the second gear 62 and the third rack 64 until the second trigger block 68 breaks away from the second cam 60. Meanwhile the insert 38 is withdrawn from and closes the safety switch 30 so that the blower-vacuum device is non-operational.

## Claims

1. A garden tool comprising:
a housing (1);
a switch(2)arranged inside the housing;
a terminal connecting tube (7) detachably connected indirectly to the housing;
a trigger mechanism (8) engageable with the switch to urge the switch into a first operating state when the terminal connecting tube is selectively connected to the housing and disengageable from the switch to urge the switch to a second operating state when the terminal connecting tube is selectively disconnected from the housing;
an intermediate connecting tube (3) connected at a distal end to the housing (1) and at a proximal end detachably to the terminal connecting tube (7), **characterised in that** the trigger mechanism (8) comprises:
an elongate trigger rod (4) slidably mounted in a receiving slot (22), adjacent and substantially parallel to an interior wall of the intermediate connecting tube (3) and
a trigger pit (9) extending axially from and beyond the proximal end of the terminal connecting tube (7) such that when the terminal connecting tube is connected to the intermediate connecting tube, the trigger pin advances the elongate trigger rod to urge the switch (2) into the first operating state.

2. A garden tool as claimed in claim 1 wherein the first operating state is open so that the garden tool is operational and the second operating state is closed so that the garden tool is non-operational.

3. A garden tool as claimed in claim 1, wherein the switch is a microswitch.

4. A garden tool as claimed in claim 1 wherein the switch is a safety switch.

5. A garden tool as claimed in claim 1 wherein when the terminal connecting tube (7) is disconnected from the intermediate connecting tube (3), the elongate trigger rod (4) is retracted to urge the switch (2) into the second operating state.

6. A garden tool as claimed in claim 1 or 5 wherein the trigger mechanism (8) further includes:
a restoring member (10) for retracting the elongate trigger rod (4), wherein the restoring member includes a spring (6) slidably mounted on the elongate trigger rod between a stopper (5) formed on an inner wall of the intermediate connecting tube (3) and an enlarged portion (12) on the elongate trigger rod.

7. A garden tool as claimed in claim 1 5 or 6 wherein the trigger pin 2, (9) is a push rod which when the terminal connecting tube (7) is connected to the intermediate connecting tube (3) advances the elongate trigger rod (4) into sliding engagement with the switch (2).

8. A garden tool as claimed in any of claims 1 to 7 wherein a first end of the elongate trigger rod (4) adjacent to the switch (2) terminates in a substantially C-shaped linear cam (25) engageable with the switch.

9. A garden tool as claimed in claim 8 wherein the switch (2) comprises:
a button (27), wherein when the terminal connecting tube (7) is connected to the intermediate connecting tube (3), the substantially C-shaped linear cam (25) elevates the button to urge the switch into the first operating state.

10. A garden tool as claimed in any preceding claim being a blower-vacuum device.

## Patentansprüche

1. Gartengerät, umfassend:
ein Gehäuse (1),
einen Schalter (2), der im Inneren des Gehäuses angeordnet ist;
ein endständiges Verbindungsrohr (7), das indirekt mit dem Gehäuse lösbar verbunden ist;
einen Auslösemechanismus (8), der mit dem Schalter in Eingriff bringbar ist, um den Schalter in einen ersten Betriebszustand zu drängen, wenn das endständige Verbindungsrohr selektiv mit dem Gehäuse verbunden wird, und von dem Schalter außer Eingriff bringbar ist, um den Schalter in einen zweiten Betriebszustand zu drängen, wenn das endständige Verbindungsrohr selektiv vom Gehäuse abgetrennt wird,
ein Zwischenverbindungsrohr (3), das an einem distalen Ende mit dem Gehäuse (1) verbunden ist und an einem proximalen Ende mit dem endständigen Verbindungsrohr (7) verbunden ist, **dadurch gekennzeichnet, dass** der Auslösemechanismus (8) umfasst:
eine langgestreckte Auslösestange (4), verschiebbar in einem Aufnahmespalt (22) montiert, angrenzend an und im Wesentlichen parallel zu eine(r) Innenwand des Zwischenverbindungsrohrs (3), und
einen Auslösestift (9), der sich axial von dem proximalen Ende des endständigen Verbindungsrohrs (7) und darüber hinaus erstreckt, so dass, wenn das endständige Verbindungsrohr mit dem Zwischenverbindungsrohr verbunden wird, der Auslösestift nach vorne bewegt, um den Schalter (2) in den ersten Betriebszustand zu drängen.

2. Gartengerät, wie es in Anspruch 1 beansprucht ist, wobei der erste Betriebszustand offen ist, so dass das Gartengerät betriebsbereit ist, und der zweite Betriebszustand geschlossen ist, so dass das Gartengerät nicht betriebsbereit ist.

3. Gartengerät, wie es in Anspruch 1 beansprucht ist, wobei der Schalter ein Mikroschalter ist.

4. Gartengerät, wie es in Anspruch 1 beansprucht ist, wobei der Schalter ein Sicherheitsschalter ist.

5. Gartengerät, wie es in Anspruch 1 beansprucht ist, wobei, wenn das endständige Verbindungsrohr (7) von dem Zwischenverbindungsrohr (3) abgetrennt wird, die langgestreckte Auslösestange (4) zurückgezogen wird, um den Schalter (2) in den zweiten Betriebszustand zu drängen.

6. Gartengerät, wie es in Anspruch 1 oder 5 beansprucht ist, wobei der Auslösemechanismus (8) außerdem umfasst:
ein Rückstellelement (10) zum Zurückziehen der langgestreckten Auslösestange (4), wobei das Rückstellelement eine Feder (6) umfasst, die verschiebbar an der langgestreckten Auslösestange zwischen einem Stopper (5), gebildet an einer Innenwand des Zwischenverbindungsrohrs (3), und einem vergrößerten Abschnitt (12) an dem langgestreckten Auslösestab montiert ist.

7. Gartengerät, wie es in Anspruch 1, 5 oder 6 beansprucht ist, wobei der Auslösestift (9) eine Schubstange ist, die, wenn das endständige Verbindungsrohr (7) mit dem Zwischenverbindungsrohr (3) verbunden wird, die langgestreckte Auslösestange (4) in Schiebeeingriff mit dem Schalter (2) nach vorne bewegt.

8. Gartengerät, wie es in einem der Ansprüche 1-7 beansprucht ist, wobei ein erstes Ende der langgestreckten Auslösestange (4), angrenzend an den Schalter (2), in einer im Wesentlichen C-förmigen linearen Nocke (25), die mit dem Schalter in Eingriff bringbar ist, endet.

9. Gartengerät, wie es in Anspruch 8 beansprucht ist, wobei der Schalter (2) umfasst:
einen Knopf (27), wobei, wenn das endständige Verbindungsrohr (7) mit dem Zwischenverbindungsrohr (3) verbunden wird, die im Wesentlichen C-förmige lineare Nocke (25) den Knopf hebt, um den Schalter in den ersten Betriebszustand zu drängen.

10. Gartengerät, wie es in einem vorangehenden Anspruch beansprucht ist, das ein Blas-Saug-Gerät ist.

## Revendications

1. Outil de jardinage comprenant :
un carter (1) ;
un commutateur (2) agencé à l'intérieur du carter ;
un tube de raccordement terminal (7) raccordé de manière détachable indirectement au carter ;
un mécanisme de déclenchement (8) pouvant être mis en prise avec le commutateur pour solliciter le commutateur dans un premier état de fonctionnement lorsque le tube de raccordement terminal est raccordé de manière sélective au carter et pouvant être séparé du commutateur pour solliciter le commutateur dans un second état de fonctionnement lorsque le tube de raccordement terminal est séparé de manière sélective du carter ;
un tube de raccordement intermédiaire (3) raccordé à une extrémité distale au carter (1) et à une extrémité proximale de manière détachable au tube de raccordement terminal (7), **caractérisé en ce que** le mécanisme de déclenchement (8) comprend :
une tige de déclenchement (4) allongée montée de manière coulissante dans une fente de réception (22) adjacente et sensiblement parallèle à une paroi intérieure du tube de raccordement intermédiaire (3) ; et
un tenon de déclenchement (9) s'étendant axialement à partir et au-delà de l'extrémité proximale du tube de raccordement terminal (7) de sorte que, lorsque le tube de raccordement terminal est raccordé au tube de raccordement intermédiaire, le tenon de déclenchement avance la tige de déclenchement allongée pour solliciter le commutateur (2) dans le premier état de fonctionnement.

2. Outil de jardinage selon la revendication 1, dans lequel le premier état de fonctionnement est un état ouvert de sorte que l'outil de jardinage est opérationnel et le second état de fonctionnement est un état fermé de sorte que l'outil de jardinage n'est pas opérationnel.

3. Outil de jardinage selon la revendication 1, dans lequel le commutateur est un micro-commutateur.

4. Outil de jardinage selon la revendication 1, dans lequel le commutateur est un commutateur de sécurité.

5. Outil de jardinage selon la revendication 1, dans lequel, lorsque le tube de raccordement terminal (7) est séparé du tube de raccordement intermédiaire (3), la tige de déclenchement (4) allongée est rétractée pour solliciter le commutateur (2) dans le second état de fonctionnement.

6. Outil de jardinage selon la revendication 1 ou 5, dans lequel le mécanisme de déclenchement (8) comprend en outre :
un élément de rétablissement (10) pour rétracter la tige de déclenchement (4) allongée, dans lequel l'élément de rétablissement comprend un ressort (6) monté de manière coulissante sur la tige de déclenchement allongée entre une butée (5) formée sur une paroi interne du tube de raccordement intermédiaire (3) et une partie élargie (12) sur la tige de déclenchement allongée.

7. Outil de jardinage selon la revendication 1, 5 ou 6, dans lequel le tenon de déclenchement (9) est une tige de poussée qui, lorsque le tube de raccordement terminal (7) est raccordé au tube de raccordement intermédiaire (3), avance la tige de déclenchement (4) allongée en prise de manière coulissante avec le commutateur (2).

8. Outil de jardinage selon l'une quelconque des revendications 1 à 7, dans lequel une première extrémité de la tige de déclenchement (4) allongée adjacente au commutateur (2) se termine en une came linéaire (25) sensiblement en forme de C pouvant être mise en prise avec le commutateur.

9. Outil de jardinage selon la revendication 8, dans lequel le commutateur (2) comprend :
un bouton (27), dans lequel, lorsque le tube de raccordement terminal (7) est raccordé au tube de raccordement intermédiaire (3), la came linéaire (25) sensiblement en forme de C élève le bouton pour solliciter le commutateur dans le premier état de fonctionnement.

10. Outil de jardinage selon l'une quelconque des revendications précédentes qui est un dispositif soufflant-aspirant.
